(19) Europäisches Patentamt / European Patent Office / Office européen des brevets

(11) **EP 3 806 403 B1**

(12) **EUROPEAN PATENT SPECIFICATION**

(45) Date of publication and mention
of the grant of the patent:
**19.02.2025 Bulletin 2025/08**

(21) Application number: **19810683.3**

(22) Date of filing: **22.05.2019**

(51) International Patent Classification (IPC):
*H04L 43/0852* (2022.01)    *H04L 67/55* (2022.01)
*H04L 51/224* (2022.01)    *H04L 12/18* (2006.01)
*H04L 43/0864* (2022.01)    *H04L 43/10* (2022.01)
*H04L 51/18* (2022.01)

(52) Cooperative Patent Classification (CPC):
**H04L 43/0852; H04L 12/1859; H04L 51/224;
H04L 67/55;** H04L 43/0864; H04L 43/10;
H04L 51/18

(86) International application number:
**PCT/KR2019/006138**

(87) International publication number:
**WO 2019/231163 (05.12.2019 Gazette 2019/49)**

(54) **APPARATUS AND METHOD FOR MANAGING MESSAGE TRANSMISSION DELAY**

VORRICHTUNG UND VERFAHREN ZUR VERWALTUNG DER
NACHRICHTENÜBERTRAGUNGSVERZÖGERUNG

APPAREIL ET PROCÉDÉ DE GESTION DE RETARD DE TRANSMISSION DE MESSAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2018  KR 20180062318**

(43) Date of publication of application:
**14.04.2021  Bulletin 2021/15**

(73) Proprietor: **Samsung Sds Co., Ltd.,
Seoul 05510 (KR)**

(72) Inventor: **YOON, Hee-Tae
Seoul 05510 (KR)**

(74) Representative: **Grünecker Patent- und
Rechtsanwälte
PartG mbB
Leopoldstraße 4
80802 München (DE)**

(56) References cited:
WO-A1-2018/041092    JP-A- 2014 171 037
KR-A- 20100 048 124    KR-A- 20130 109 410
KR-A- 20130 135 916    KR-A- 20180 022 921
KR-A- 20190 047 889    US-A1- 2003 031 185
US-A1- 2018 191 485    US-B1- 7 012 900

EP 3 806 403 B1

**Description**

[Technical Field]

Embodiments of the present invention relate to a technology for determining and managing message transmission delay.

[Background Art]

In the conventional mobile message service, a push message is transmitted to a client device by using a push service to notify that there is a message to receive, and the client device that has received the push message is configured to read the received message by accessing a message server.

In the conventional mobile message service, it is not possible to determine whether a message is delayed until a client device receives a push message, and only the simple transmission delay can be determined since the message transmission delay can only be measured by the time difference between when a server transmits the push message and when the client device accesses a message server and reads the message.

Accordingly, there is a need for a method for allowing a client device to determine a message transmission delay caused by an issue in setting a network area and a client device and thereby actively cope with the message transmission delay.

US 2003/031185 A1 discloses that every time a packet is received from a server, a communication performance measuring equipment transmits/receives a predetermined control packet to/from a client and a branching node, respectively, thereby collecting information about communication environment. Based on the information and a predetermined delay model, a delay time in delivering the same packet from the server to the client is estimated, and, according to the delay time, transmission timing of an acknowledge packet in response to the received packet is controlled. Thus, communication performance between a client and a server is measured.

It is therefore the object of the present invention to provide an improved apparatus for managing message transmission delay, and a corresponding method.

This object is solved by the subject matter of the independent claims.

Preferred embodiments are defined by the dependent claims.

[Technical Problem]

Embodiments of the present invention provide an apparatus and method for managing message transmission delay.

[Technical Solution]

According to one embodiment of the present invention, an apparatus for managing message transmission delay includes a time gap calculator configured to acquire local time information of a message server and calculate, based on the acquired local time information, a time gap between local time of the message server and local time of a client device and a delay time calculator configured to calculate, when the client device receives a push message including transmission time information based on the local time of the message server from the message server, a delay time for the push message based on reception time information of the push message based on the local time of the client device, the transmission time information included in the push message, and the time gap.

The time gap calculator transmits a request message for requesting the local time information of the message server to the message server and receive, from the message server, a response message including the local time information of the message server and the local time information included in the response message includes a transmission time of the response message based on the local time of the message server.

The time gap calculator calculates a round trip time (RTT) using a transmission time of the request message based on the local time of the client device and a reception time of the response message based on the local time of the client device and calculate the time gap using the transmission time of the request message, the RTT, and the transmission time of the response message.

The apparatus may further include a connection history manager configured to store network connection history information of the client device, a delay information manager configured to store message delay information regarding the push message, and a controller configured to control the client device based on at least one of the network connection history information and the message delay information.

The network connection history information may include network identification information, a connection start time, and a connection end time for each network to which the client device is connected and the message delay information may include the reception time information, the delay time, and network identification information of a network to which the client device was connected at the time when the push message was transmitted.

The delay information manager may identify, based on the reception time information, the delay time, and the network connection history information, the network to which the client device was connected at the time when the push message was transmitted.

The controller may control the client device to adjust a ping period of a push session for receiving a push message in a network to which the client device is currently connected, based on the delay time and the network identification information which are included in the message delay information.

The controller may identify a past connection holding-time of the client device for the network to which the client device is currently connected from the network connection history information, determine a network to use for push message reception among the network to which the client device is currently connected and other networks to which the client device is connectable, and control the client device to receive a push message through the determined network.

The message delay information may further include reception failure information on failure to receive the push message through the network to which the client device was connected at the time when the push message was transmitted and when the network identification information of the network to which the client device was connected at the time when the push message was transmitted is different from network identification information of a network to which the client device was connected at the time of receiving the push message, the delay information manager may determine that the reception of the push message through the network to which the client device was connected at the time when the push message was transmitted has failed.

The controller may determine, based on the delay time, the network identification information, and the reception failure information which are included in the message delay information, a network to use for push message reception among the network to which the client device is currently connected and other networks to which the client device is connectable and control the client device to receive a push message through the determined network.

The message delay information may further include doze mode state information of the client device and the delay information manager may determine that the client device is in doze mode state when the client device has failed to receive a message corresponding to the push message from the message server after receiving the push message.

The controller may control, based on the doze mode state information, the client device to provide a notification message for doze mode exception handling to a user.

According to another embodiment of the present invention, a method of managing message transmission delay includes acquiring local time information of a message server, calculating, based on the acquired local time information, a time gap between local time of the message server and local time of a client device, and calculating, when the client device receives a push message including transmission time information based on the local time of the message server from the message server, a delay time for the push message based on reception time information of the push message based on the local time of the client device, the transmission time information included in the push message, and the time gap.

The acquiring includes transmitting a request message for requesting the local time information of the message server to the message server and receiving, from the message server, a response message including the local time information of the message server and the local time information included in the response message includes a transmission time of the response message based on the local time of the message server.

The calculating of the time gap comprises calculating an RTT using a transmission time of the request message based on the local time of the client device and a reception time of the response message based on the local time of the client device, and calculating the time gap using the transmission time of the request message, the RTT, and the transmission time of the response message.

The method may further include controlling the client device based on at least one of the network connection history information and the message delay information.

The network connection history information may include network identification information, a connection start time, and a connection end time for each network to which the client device is connected and the message delay information may include the reception time information, the delay time, and network identification information of a network to which the client device was connected at the time when the push message was transmitted.

The controlling includes identifying, based on the reception time information, the delay time, and the network connection history information, the network to which the client device was connected at the time when the push message was transmitted.

The controlling may include controlling the client device to adjust a ping period of a push session for receiving a push message in a network to which the client device is currently connected, based on the delay time and the network identification information which are included in the message delay information.

The controlling may include identifying a past connection holding-time of the client device for the network to which the client device is currently connected from the network connection history information, determining a network to use for push message reception among the network to which the client device is currently connected and other networks to which the client device is connectable, and controlling the client device to receive a push message through the determined network.

The message delay information may further include reception failure information on failure to receive the push message through the network to which the client device was connected at the time when the push message was transmitted and the controlling may include, when the network identification information of the network to which the client device was connected at the time when the push message was transmitted is different from network identification information of a network to which the client device was connected at the time of receiving the push message, determining that the reception of the push message through the network to which the client device was connected at the time when the push message was transmitted has failed.

The controlling may include determining, based on the delay time, the network identification information, and the reception failure information which are included in the message delay information, a network to use for push message reception among the network to which the client device is currently connected and other networks to which the client device is connectable, and controlling the client device to receive a push message through the determined network.

The message delay information may further include doze mode state information of the client device and the controlling may include determining that the client device is in doze mode state when the client device has failed to receive a message corresponding to the push message from the message server after receiving the push message.

The controlling may include controlling, based on the doze mode state information, the client device to provide a notification message for doze mode exception handling to a user.

[Advantageous Effects]

According to embodiments of the present invention, a client device that performs a message service may determine a delay time of message transmission by calculating a time gap between a message server and the client device.

**In** addition, according to embodiments of the present invention, the client device is allowed to actively deal with the message transmission delay using the calculated delay time of the message transmission, thereby effectively preventing the message transmission delay.

[Description of Drawings]

FIG. 1 is a diagram illustrating a configuration of a message service system 100 according to an embodiment of the present invention.

FIG. 2 is a diagram illustrating a configuration of an apparatus for managing message transmission delay according to one embodiment of the present invention.

FIG. 3 is an exemplary diagram for describing a process of acquiring local time information of a message server according to one embodiment of the present invention.

FIG. 4 is an exemplary diagram for describing a process of receiving at a client device a push message from a message server according to one embodiment of the present invention.

FIG. 5 is a diagram illustrating a configuration of an apparatus for managing message transmission delay according to a further embodiment of the present invention.

FIG. 6 is a flowchart illustrating a method of managing message transmission delay according to one embodiment of the present invention.

FIG. 7 is a flowchart illustrating a method of managing message transmission delay according to a further embodiment of the present invention.

FIG. 8 is a block diagram for describing an example of a computing environment including a computing device suitable to be used in exemplary embodiments.

[Mode for Invention]

The following description is provided to assist the reader in gaining a comprehensive understanding of the methods, apparatuses, and/or systems described herein.

Descriptions of well-known functions and constructions may be omitted for increased clarity and conciseness. Also, terms described in below are selected by considering functions in the embodiment and meanings may vary depending on, for example, a user or operator's intentions or customs. Therefore, definitions of the terms should be made based on the overall context. The terminology used in the detailed description is provided only to describe embodiments of the present disclosure and not for purposes of limitation. Unless the context clearly indicates otherwise, the singular forms include the plural forms. It should be understood that the terms "comprises" or "includes" specify some features, numbers, steps, operations, elements, and/or combinations thereof when used herein, but do not preclude the presence or possibility of one or more other features, numbers, steps, operations, elements, and/or combinations thereof in addition to the description.

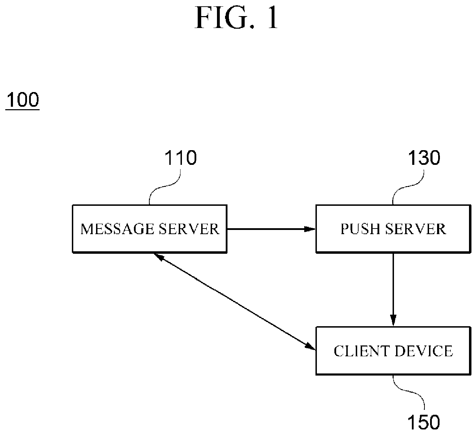

FIG. 1 is a diagram illustrating a configuration of a message service system 100 according to an embodiment of the present invention.

Referring to FIG. 1, a message service system 100 according to one embodiment of the present invention includes a message server 110, a push server 130, and a client device 150.

The message server 110 is a server of providing a message service to the client device 150. In this case, the message service is a service for transmitting and receiving a message between users using a messenger application installed in the client device 150. In this case, the messenger application means, for example, a program that allows a plurality of users to exchange messages with each other.

In detail, when the message server 110 receives a message to be transmitted to the user of the client device 150 from a specific user who uses the message service, the message server 110 may transmit a push message to the client device by requesting the push server 130 to transmit the push message for notifying that there is a message to be transmitted to the client device 150.

In addition, when the message server 110 receives a transmission request for a message corresponding to the push message from the client device 150 after transmitting the push message to the client device 150, the message server 110 may transmit the requested message to the client device 150.

The push server 130 is a server for transmitting a push message to the client device 150 at the request of the message server 110. For example, when the push server 130 receives a request to transmit a push message from the message server 110 to the client device 150, the push server 130 may transmit the push message to the client device 150.

The client device 150 is a device used by a user to receive a message service, and may be a mobile device in various forms that can be carried by a user, for example, a laptop personal computer (PC), a tablet PC, a phablet device, a personal digital assistant (PDA), a smartphone, and the like. When the client device 150 receives the push message from the push server 130, the client device 150 may request the message server 110 to transmit a message corresponding to the push message and may receive the message requested to be transmitted from the message server 110.

Meanwhile, in the example shown in FIG. 1, the client device 150 is illustrated as directly receiving the message corresponding to the push message from the message server 110, but is not necessarily limited thereto. That is, according to an embodiment, the message service system 100 may further include a proxy server (not shown) that receives and stores a message corresponding to the push message provided from the message server 110 to the client device 150. In this case, the client device 150 that has received the push message may request the proxy server to send a message corresponding to the push message and may receive, from the proxy server, the message requested to be transmitted.

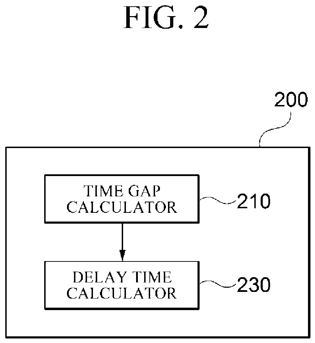

FIG. 2 is a diagram illustrating a configuration of an apparatus 200 for managing message transmission delay according to one embodiment of the present invention.

The apparatus 200 for managing message transmission delay illustrated in FIG. 2 may be implemented as, for example, a configuration included in the client apparatus 150 illustrated in FIG. 1.

Referring to FIG. 2, the apparatus 200 for managing message transmission delay according to one embodiment of the present invention includes a time gap calculator 210 and a delay time calculator 230.

The time different calculator 210 obtains local time information of a message server 110 and calculates a time difference between the local time of the message server 110 and the local time of a client device 150 based on the obtained local time information. In this case, the local time of the message server 110 means the time set on the message server 110. In addition, the local time of the client device 150 means the time set on the client device 150.

According to one embodiment of the present invention, the time gap calculator 210 transmits a request message for requesting the local time information of the message server 110 to the message server 110, and receives a response message including the local time information of the message server 110 from the message server 110.

In this case, according to one embodiment of the present invention, the local time information of the message server 110 included in the response message includes a transmission time of the response message based on the local time of the message server 110.

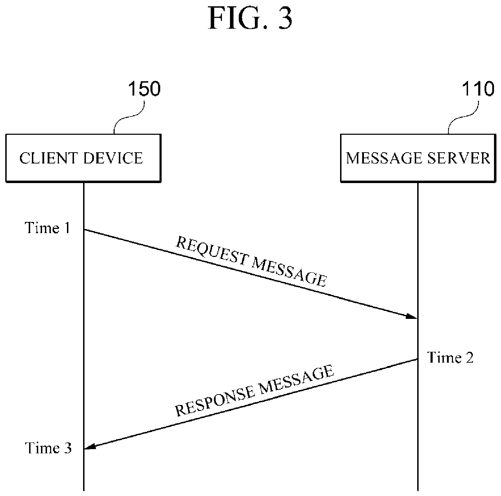

FIG. 3 is an exemplary diagram for describing a process of acquiring local time information of a message server 110 according to one embodiment of the present invention.

Referring to FIG. 3, first, the client device 150 transmits a request message for requesting local time information of the message server 110 to the message server 110, and measures and stores a transmission time Time 1 of the request message based on the local time of the client device 150.

Upon receiving the request message, the message server 110 transmits a response message including a transmission time Time 2 based on the local time of the message server 110 to the client device 150.

The client device 150 that receives the response message measures and stores a reception time Time 3 of the response message based on the local time of the client device 150.

Meanwhile, as shown in FIG. 3, the time gap calculator 210 calculates a round trip time (RTT) using the transmission time Time 1 of the request message and the reception time Time 3 of the response message. In this case, the RTT refers to a time from a point in time when the request message is transmitted from the client device 150 to the message server 110 to a point in time when the client device 150 receives the response message from the message server 110. Specifically, the RTT is calculated according to Equation 1 below.

$$[\text{Equation 1}]$$

$$RTT = Time\ 3 - Time\ 1$$

In addition, the time gap calculator 210 calculates a time gap between the client device 150 and the message server 110 using the calculated RTT, the transmission time Time 1 of the request message, and the transmission time Time 2 included in the response message. Specifically, the time gap is calculated according to Equation 2 below.

$$[\text{Equation 2}]$$

$$Time\ Gap = Time2 - Time1 - (RTT\ /\ 2)$$

On the other hand, when the client device 150 receives, from the message server 110, the push message including the transmission time information based on the local time of the message server 110, the delay time calculator 230 calculates a delay time of the received push message based on the reception time information of the push message based on the local time of the client device 150, the transmission time information included in the received push message, and the time gap calculated by the time gap calculator 210.

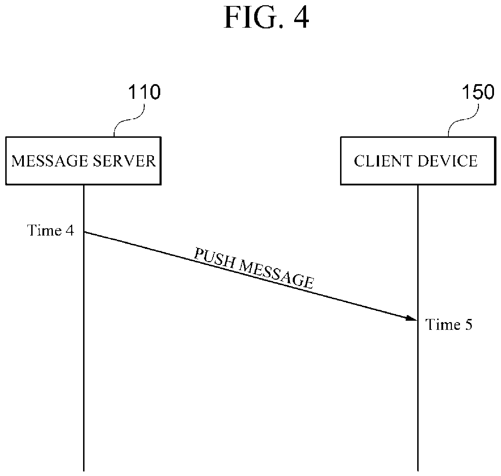

FIG. 4 is an exemplary diagram for describing a process of receiving at a client device 150 a push message from a message server 110 according to one embodiment of the present invention.

Referring to FIG. 4, first, the message server 110 transmits a push message including a transmission time Time 4 of a push message measured based on the local time of the message server 110 to the client device 150.

The client device 150 that receives the push message measures a reception time Time 5 of the push message based on the local time of the client device 150 at the moment of receiving the push message.

Meanwhile, as shown in FIG. 4, the delay time calculator 230 calculates a delay time using the reception time Time 5 of the push message, the transmission time Time 4 of the push message, and the time gap calculated by the time gap calculator 210. Specifically, the delay time is calculated using Equation 3 below.

$$[\text{Equation 3}]$$

$$Delay\ Time = Time\ 4 - Time\ 5 + Time\ Gap$$

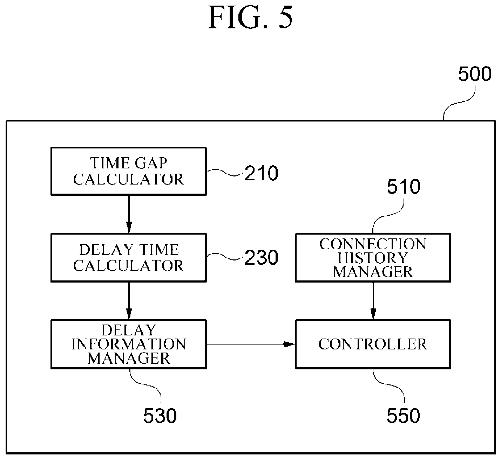

FIG. 5 is a diagram illustrating a configuration of an apparatus 500 for managing message transmission delay according to a further embodiment of the present invention.

Referring to FIG. 5, the apparatus 500 for managing message transmission delay according to a further embodiment of the present invention further includes a connection history manager 510, a delay information manager 530, and a controller 550. In the example illustrated in FIG. 5, a time gap calculator 210 and a delay time calculator 230 are the same as those illustrated in FIG. 2, and thus the redundant descriptions thereof will be omitted.

The connection history manager 510 may store network connection history information of a client device 150. In this case, the network connection history information may include information on each of the networks to which the client device 150 has been connected in the past and is currently connected.

According to one embodiment of the present invention, the network access history information may include network identification information, a connection start time, and a connection end time for each network to which the client device 150 is connected. In this case, the network identification information is to distinguish each network from other networks, and may include, for example, a basic service set identifier (BSSID).

Meanwhile, the connection start time and the connection end time are times measured based on the local time of the client device 150. For example, the connection start time is a time measured based on the local time of the client device 150 when the client device 150 is connected to the network, and the connection end time is a time measured based on the local time of the client device 150 when the client device 150 terminates its connection to the network.

The delay information manager 530 may store the message delay information regarding the push message received by the client device 150. In this case, the message delay information may include information related to the transmission delay of the push message generated in the process of transmitting the push message. Meanwhile, when the client device 150 receives a plurality of push messages, the delay information manager 530 may store message delay information for each of the plurality of push messages.

According to one embodiment of the present invention, the message delay information may include a reception time of the push message, a delay time for the push message, and network identification information of the network to which the client device 150 was connected at the time when the push message was transmitted. In this case, the reception time of the push message may be a time measured based on the local time of the client device 150 at the time when the client device 150 receives the push message.

On the other hand, the delay information manager 530 may identify the network identification information of the network to which the client device 150 was connected at the time when the push message was transmitted, based on the reception time information of the push message, the delay time for the push message, and the network connection history information.

Specifically, the delay information manager 530 may calculate, based on the local time of the client device 150, the time at which the push message is transmitted using the reception time of the push message and the delay time calculated for the push message. Thereafter, the delay information manager 530 may determine the network to which the client device 150 was connected at the time when the push message was transmitted, by using the transmission time of the push message calculated based on the local time of the client device 150 and the connection start time and connection end time of each network included in the network connection history information.

For example, it is assumed that a reception time of a push message is "4:35:43 pm" and a delay time calculated for the push message is "3 seconds". In this case, the delay information manager 530 may calculate a time at which the push message was transmitted as "4:35:40 pm" by subtracting the delay time from the reception time of the push message. Thereafter, the delay information manager 530 may identify a network to which the client device 150 connected at "4:35:40 pm" by using the connection start time and connection end time of each network stored in the network connection history information. In addition, the delay information manager may add network identification information of the network identified from the connection history information to delay information.

Meanwhile, according to one embodiment of the present invention, the message delay information may further include reception failure information on failure to receive the push message through the network to which the client device 150 was connected at the time when the push message was transmitted.

Specifically, when the network identification information of the network to which the client device 150 was connected at the time when the push message was transmitted is different from the network identification information of the network to which the client device 150 was connected at the time of receiving the push message, the delay information manager 530 may determine that the reception of the push message through the network to which the client device 150 was connected at the time when the push message was transmitted has failed. In this case, the delay information manager 530 may obtain the network identification information of the network to which the client device 150 was connected at the time of receiving the push message, by using the reception time of the push message, and the connection start time and connection end time of each network included in the network connection history information.

In addition, according to one embodiment of the present invention, the message delay information may further include doze mode state information of the client device 150. In this case, the doze mode may refer to a function for reducing power consumption of the client device 150 by limiting network connection of the client device 150 when a preset condition is satisfied, such as when the client device 150 does not receive an input from the outside for a long time.

Specifically, according to one embodiment of the present invention, when the client device 150 fails to acquire a message corresponding to the push message from the message server 110 after receiving the push message, the delay information manager 530 may determine that the client device 150 is in doze mode state.

For example, it is assumed that the client device 150 receives a push message for notifying that there is a message to be received from the message server 110, and is connected to the message server 110 to request information on the received message. In this case, when the client device 150 fails to acquire a message corresponding to the push message, for example, when the client device 150 does not transmit a request for information on the message to the message server 110 or does not perform any action even when receiving the push message, the delay information manager 530 may determine that the client device 150 is in doze mode state and store relevant information.

On the other hand, the controller 550 may control the client device 150 based on at least one of the network connection history information of the client device 150 and the message delay information regarding the push message.

According to one embodiment of the present invention, the controller 550 may control the client device 150 to adjust a ping period of a push session for receiving a push message in the network to which the client device 150 is currently connected, based on the delay time and the network identification information which are included in the message delay information.

For example, when a ratio of the push message whose delay time is greater than or equal to a first threshold among the push messages previously received through the network to which the client device 150 is currently connected is greater than or equal to a second threshold, the controller 550 may determine that the push session timeout of the currently connected network is short. In this case, the controller 550 may control to adjust the ping period of the client device 150 to be short, thereby maintaining the push session in the currently connected network.

Also, according to another embodiment of the present invention, the controller 550 may identify, from the network connection history information, a past connection holding-time of the client device 150 with respect to the network to which the client device 150 is currently connected, and determine, based on the past connection holding-time, a network to use for push message reception among the network to which the client device 150 is currently connected and other networks to which the client device 150 is connectable. In addition, the controller 550 may control the client device 150 to receive the push message through the determined network.

For example, the controller 550 may identify the past connection holding-time of the client device 150 with respect to the network to which the client device 150 is currently connected based on the network identification information, the connection start time, and the connection end time which are included in the network connection history information. In addition, when a rate at which the past connection holding-time for the network to which the client device 150 is currently connected is less than or equal to a third threshold is greater than or equal to a fourth threshold, the controller 550 may determine that handover due to a weak electric field in the currently connected network frequently occurs. In this case, the controller 550 may control the client device 150 to connect to a network (e.g., a mobile network or the like) other than the network to which the client device 150 is currently connected.

In addition, according to another embodiment of the present invention, the controller 550 may determine a network to use for push message reception among the network to which the client device 150 is currently connected and other networks to which the client device 150 is connectable based on the delay time, the network identification information, and the reception failure information which are included in the message delay information, and control the client device 150 to receive the push message through the determined network.

In detail, the controller 550 may determine a transmission success rate of a push message through the network to which the client device 150 is currently connected by analyzing the delay time for the push messages previously received in the network to which the client device 150 is currently connected and a failure rate of the push message received through the currently connected network. For example, when the delay time of the push messages received in the network to which the client device 150 is currently connected is greater than or equal to a fifth threshold and also a ratio of the push messages that have failed to be received is greater than or equal to a sixth threshold, the controller 550 may determine that the transmission success rate of the push message through the currently connected network is low. In this case, the controller 550 may control the client device 150 to connect to a network (e.g., a mobile network or the like) other than the network to which the client device 150 is currently connected.

In addition, according to another embodiment of the present invention, the controller 550 may control the client device 150 to provide a notification message for handling a doze mode exception to a user of the client device 150 based on the doze mode state information included in the delay information regarding the push message.

In detail, when the delay information of the doze mode state information is "true" is present among the delay information on the push messages previously received by the client device 150, the controller 550 may determine that a doze mode exception handling for the message application installed in the client device 150 has not been performed. In this case, the controller 550 may provide the user of the client device 150 with a notification message for guiding that the doze mode exception handling for the message application is required to receive the push message.

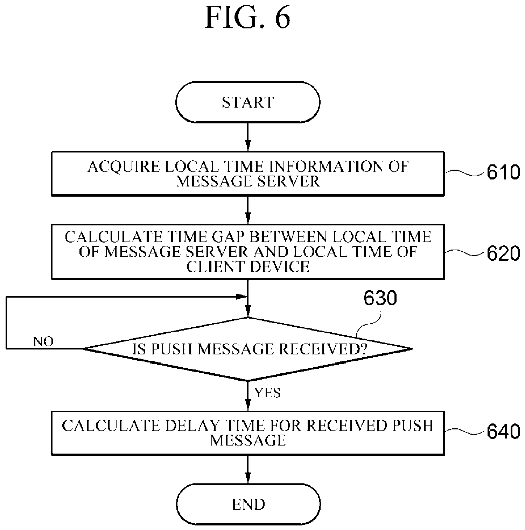

FIG. 6 is a flowchart illustrating a method of managing message transmission delay according to one embodiment of the present invention.

The method illustrated in FIG. 6 may be performed by, for example, the apparatus 200 illustrated in FIG. 2 for managing message transmission delay.

Referring to FIG. 6, the apparatus 200 for managing message transmission delay obtains local time information of the message server 110 (610).

In this case, the apparatus 200 for managing message transmission delay may transmit a request message for requesting local time information of the message server 110 to the message server 110.

In addition, the apparatus 200 for managing message transmission delay may receive a response message including the local time information of the message server 110 from the message server 110. In this case, the local time information included in the response message may include a transmission time of the response message based on the local time of the message server 110.

Thereafter, the apparatus 200 for managing message transmission delay calculates a time gap between the local time of the message server 110 and the local time of the client device 150 based on the obtained local time information (620).

At this time, the apparatus 200 for managing message transmission delay may calculate an RTT using a transmission time of the request message based on the local time of the client device 150 and a reception time of the response message based on the local time of the client device 150.

In addition, the apparatus 200 for managing message transmission delay may calculate a time gap using the transmission time of the request message based on the local time of the client device 150, the RTT, and the transmission time of the response message based on the local time of the message server 110.

Subsequently, when the client device 150 receives, from the message server 110, a push message including the transmission time information based on the local time of the message server 110 (630), the apparatus 200 for managing message transmission delay calculates a delay time for the push message based on reception time information of the push message based on the local time of the client device 150, the transmission time information included in the push message, and the time gap (640).

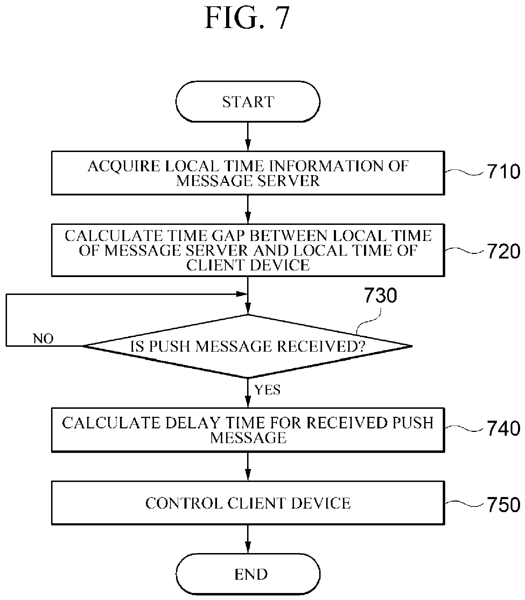

FIG. 7 is a flowchart illustrating a method of managing message transmission delay according to a further embodiment of the present invention.

The method illustrated in FIG. 7 may be performed by, for example, the apparatus 500 illustrated in FIG. 5 for managing message transmission delay.

In the example illustrated in FIG. 7, operations 710 to 740 are the same as operations 610 to 640 shown in FIG. 6, and thus redundant descriptions thereof will be omitted.

Referring to FIG. 7, the apparatus 500 for managing message transmission delay may control the client device based on at least one of network connection history information of the client device 150 and message delay information for a push message received by the client device 150 from the message server 110 (750).

In this case, according to one embodiment of the present invention, the network connection history information may include network identification information, a connection start time, and a connection end time for each network connected by the client device 150.

In addition, according to one embodiment of the present invention, the message delay information may include reception time information of a push message, delay time for the push message, and network identification information of a network to which the client device 150 was connected at the time when the push message was transmitted.

In addition, according to one embodiment of the present invention, the message delay information may further include reception failure information on failure to receive the push message through the network to which the client device 150 was connected at the time when the push message was transmitted.

In addition, according to one embodiment of the present invention, the message delay information may further include doze mode state information of the client device 150.

On the other hand, according to one embodiment of the present invention, the apparatus 500 for managing message transmission delay may control the client device 150 to adjust a ping period of a push session for receiving a push message in the network to which the client device 150 is currently connected, based on the delay time and the network identification information which are included in the message delay information.

Also, according to one embodiment of the present invention, the apparatus 500 for managing message transmission delay may identify, from the network connection history information, a past connection holding-time of the client device 150 with respect to the network to which the client device 150 is currently connected. In this case, the apparatus 500 for managing message transmission delay may determine, based on the past connection holding-time, a network to use for push message reception among the network to which the client device 150 is currently connected and other networks to which the client device 150 is connectable. In addition, the apparatus 500 for managing message transmission delay may control the client device 150 to receive the push message through the determined network.

In addition, according to one embodiment of the present invention, the apparatus 500 for managing message transmission delay may determine, based on the delay time, then network identification information, and information on whether or not the reception has failed, which are included in the message delay information, a network to use for push message reception among the network to which the client device 150 currently connected and other networks to which the client device 150 is connectable, and control the client device 150 to receive the push message through the determined network.

Also, according to one embodiment of the present invention, the apparatus 500 for managing message transmission delay may control the client device 150 to provide a notification message for doze mode exception handling to a user of the client apparatus 150 based on the doze mode state information.

In the flowcharts shown in FIGS. 6 and 7, the method is described as being divided into a plurality of operations. However, it should be noted that at least some of the operations may be performed in different order or may be combined into fewer operations or further divided into more operations. In addition, some of the operations may be omitted, or one or more extra operations, which are not illustrated, may be added to the flowchart and be performed.

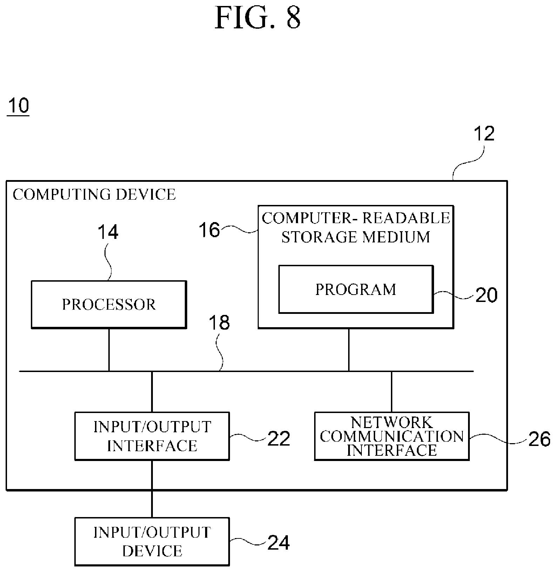

FIG. 8 is a block diagram for describing an example of a computing environment including a computing device suitable to be used in exemplary embodiments. In the illustrated embodiment, each of the components may have functions and capabilities different from those described hereinafter and additional components may be included in addition to the components described herein.

The illustrated computing environment 10 includes a computing device 12. In one embodiment, the computing device 12 may be one or more components included in the apparatus 200 or 500 for managing message transmission delay, for example, the time gap calculator 210, the delay time calculator 230, the connection history manager 510, the delay information manager 530, and the controller 550, which are illustrated in FIG. 2 or 5.

The computing device 12 may include at least one processor 14, a computer-readable storage medium 16, and a communication bus 18. The processor 14 may cause the computing device 12 to operate according to the above-described exemplary embodiment. For example, the processor 14 may execute one or more programs stored in the computer-readable storage medium 16. The one or more programs may include one or more computer executable commands, and the computer executable commands may be configured to, when executed by the processor 14, cause the computing device 12 to perform operations according to the exemplary embodiment.

The computer readable storage medium 16 is configured to store computer executable commands and program codes, program data and/or information in other suitable forms. The programs stored in the computer readable storage medium 16 may include a set of commands executable by the processor 14. In one embodiment, the computer readable storage medium 16 may be a memory (volatile memory, such as random access memory (RAM), non-volatile memory, or a combination thereof) one or more magnetic disk storage devices, optical disk storage devices, flash memory devices, storage media in other forms capable of being accessed by the computing device 12 and storing desired information, or a combination thereof.

The communication bus 18 connects various other components of the computing device 12 including the processor 14 and the computer readable storage medium 16.

The computing device 12 may include one or more input/output interfaces 22 for one or more input/output devices 24 and one or more network communication interfaces 26. The input/output interface 22 and the network communication interface 26 are connected to the communication bus 18. The input/output device 24 may be connected to other components of the computing device 12 through the input/output interface 22. The illustrative input/output device 24 may be a pointing device (a mouse, a track pad, or the like), a keyboard, a touch input device (a touch pad, a touch screen, or the like), an input device, such as a voice or sound input device, various types of sensor devices, and/or a photographing device, and/or an output device, such as a display device, a printer, a speaker, and/or a network card. The illustrative input/output device 24 which is one component constituting the computing device 12 may be included inside the computing device 12 or may be configured as a separate device from the computing device 12 and connected to the computing device 12.

**Claims**

1. An apparatus (200; 500) for managing message transmission delay, the apparatus configured to be included in a client device (150), the apparatus comprising:

   a time gap calculator (210) configured to:

      transmit a request message for requesting local time information of a message server (110) to the message server,
      receive, from the message server, a response message including the local time information of the message server, wherein the local time information included in the response message comprises a transmission time (Time 2) of the response message based on local time of the message server,
      calculate a round trip time, RTT, using a transmission time (Time 1) of the request message based on local time of the client device and a reception time (Time 3) of the response message based on the local time of the client device, and
      calculate a time gap between the local time of the message server and the local time of a client device (150), wherein the time gap is calculated as a mathematical difference between:

         a difference between the transmission time (Time 2) of the response message and the transmission time (Time 1) of the request message, and
         one half of the round trip time, RTT; and

   a delay time calculator (230) configured to:
   calculate, when the client device receives a push message including a transmission time (Time 4) based on the local time of the message server from the message server, a delay time for the push message , wherein the delay time is calculated as a mathematical sum of:

      a difference between the transmission time (Time 4) included in the push message and a reception time (Time 5) of the push message based on the local time of the client device, and
      the time gap.

2. The apparatus (200; 500) of claim 1, further comprising:

a connection history manager (510) configured to store network connection history information of the client device (150);

a delay information manager (530) configured to store message delay information regarding the push message; and

a controller (550) configured to control the client device based on at least one of the network connection history information and the message delay information,

wherein the network connection history information comprises network identification information, a connection start time, and a connection end time for each network to which the client device is connected, and

the message delay information comprises the reception time information, the delay time, and network identification information of a network to which the client device was connected at the time when the push message was transmitted.

3. The apparatus (200; 500) of claim 2, wherein the delay information manager is configured to identify, based on the reception time information, the delay time, and the network connection history information, the network to which the client device (150) was connected at the time when the push message was transmitted.

4. The apparatus (200; 500) of claim 2, wherein the controller is configured to control the client device to adjust a ping period of a push session for receiving a push message in a network to which the client device is currently connected, based on the delay time and the network identification information which are included in the message delay information.

5. The apparatus (200; 500) of claim 2, wherein the controller (550) is configured to identify a past connection holding-time of the client device (150) for the network to which the client device is currently connected from the network connection history information, determine a network to use for push message reception among the network to which the client device is currently connected and other networks to which the client device is connectable, and control the client device to receive a push message through the determined network.

6. The apparatus (200; 500) of claim 2, wherein

the message delay information further comprises reception failure information on failure to receive the push message through the network to which the client device (150) was connected at the time when the push message was transmitted,

when the network identification information of the network to which the client device was connected at the time when the push message was transmitted is different from network identification information of a network to which the client device was connected at the time of receiving the push message, the delay information manager (530) is configured to determine that the reception of the push message through the network to which the client device was connected at the time when the push message was transmitted has failed, and

the controller (550) is configured to determine, based on the delay time, the network identification information, and the reception failure information which are included in the message delay information, a network to use for push message reception among the network to which the client device is currently connected and other networks to which the client device is connectable, and control the client device to receive a push message through the determined network.

7. The apparatus (200; 500) of claim 2, wherein

the message delay information further comprises doze mode state information of the client device (150),

the delay information manager (530) is configured to determine that the client device is in doze mode state when the client device has failed to receive a message corresponding to the push message from the message server (110) after receiving the push message, and

the controller (550) is configured to control, based on the doze mode state information, the client device to provide a notification message for doze mode exception handling to a user.

8. A method of managing message transmission delay, the method being performed by an apparatus (200; 500) being included in a client device (150), the method comprising:

acquiring (610; 710) local time information of a message server (110), wherein the acquiring comprises:

transmitting a request message for requesting the local time information of the message server to the message server, and

receiving, from the message server, a response message including the local time information of the message server, wherein the local time information included in the response message comprises a transmission time (Time 2) of the response message based on a local time of the message server;

calculating, (620; 720) based on the acquired local time information, a time gap between the local time of the message server and local time of the client device, wherein the calculating of the time gap comprises calculating a round trip time, RTT, using a transmission time (Time 1) of the request message based on the local time of the client device and a reception time (Time 3) of the response message based on the local time of the client device; and calculating the time gap as a mathematical difference between:

> a difference between the transmission time (Time 2) of the response message and the transmission time (Time 1) of the request message, and
> one half of the round trip time, RTT; and

calculating (640; 740), when the client device receives (630; 730) a push message including a transmission time (Time 4) based on the local time of the message server from the message server, a delay time for the push message wherein the delay time is calculated as a mathematical sum of:

> a difference between the transmission time (Time 4) included in the push message and a reception time (Time 5) of the push message based on the local time of the client device, and
> the time gap.

9.  The method of claim 8, further comprising controlling (750) the client device (150) based on at least one of the network connection history information and the message delay information,

    wherein the network connection history information comprises network identification information, a connection start time, and a connection end time for each network to which the client device is connected, and the message delay information comprises the reception time information, the delay time, and network identification information of a network to which the client device was connected at the time when the push message was transmitted.

10. The method of claim 9, wherein the controlling (750) comprises identifying, based on the reception time information, the delay time, and the network connection history information, the network to which the client device (150) was connected at the time when the push message was transmitted.

11. The method of claim 9, wherein the controlling (750) comprises controlling the client device (150) to adjust a ping period of a push session for receiving a push message in a network to which the client device is currently connected, based on the delay time and the network identification information which are included in the message delay information.

12. The method of claim 9, wherein the controlling (750) comprises:

    identifying a past connection holding-time of the client device (150) for the network to which the client device is currently connected from the network connection history information;
    determining a network to use for push message reception among the network to which the client device is currently connected and other networks to which the client device is connectable; and
    controlling the client device to receive a push message through the determined network.

13. The method of claim 9, wherein the message delay information further comprises reception failure information on failure to receive the push message through the network to which the client device (150) was connected at the time when the push message was transmitted, and

    the controlling (750) comprises determining, based on the delay time, the network identification information, and the reception failure information which are included in the message delay information, a network to use for push message reception among the network to which the client device is currently connected and other networks to which the client device is connectable;
    controlling the client device to receive a push message through the determined network; and when the network identification information of the network to which the client device was connected at the time when the push message was transmitted is different from network identification information of a network to which the client device was connected at the time of receiving the push message, determining that the reception of the push message through the network to which the client device was connected at the time when the push message was transmitted has failed.

14. The method of claim 9, wherein

the message delay information further includes doze mode state information of the client device (150), and the controlling (750) comprises determining that the client device is in doze mode state when the client device has failed to receive a message corresponding to the push message from the message server after receiving the push message; and controlling, based on the doze mode state information, the client device to provide a notification message for doze mode exception handling to a user.

**Patentansprüche**

1. Vorrichtung (200; 500) zum Verwalten einer Nachrichtenübertragungsverzögerung, wobei die Vorrichtung konfiguriert ist, um in einem Client-Gerät (150) enthalten zu sein, wobei die Vorrichtung umfasst:

einen Zeitabstand-Berechner (210), der konfiguriert ist zum:

Senden einer Anfragenachricht für das Anfragen von lokalen Zeitinformationen eines Nachrichten-Servers (110) an den Nachrichten-Server,
Empfangen, von dem Nachrichten-Server, einer Antwortnachricht, die die lokalen Zeitinformationen des Nachrichten-Servers enthält, wobei die in der Antwortnachricht enthaltenen lokalen Zeitinformationen eine Sendezeit (Zeit 2) der Antwortnachricht basierend auf einer lokalen Zeit des Nachrichten-Servers enthalten,
Berechnen einer Umlaufzeit (Round Trip Time bzw. RTT), unter Verwendung einer Sendezeit (Zeit 1) der Anfragenachricht basierend auf einer lokalen Zeit des Client-Geräts und einer Empfangszeit (Zeit 3) der Antwortnachricht basierend auf der lokalen Zeit des Client-Geräts, und
Berechnen eines Zeitabstands zwischen der lokalen Zeit des Nachrichten-Servers und der lokalen Zeit eines Client-Geräts (150), wobei der Zeitabstand als eine mathematische Differenz berechnet wird zwischen:

einer Differenz zwischen der Sendezeit (Zeit 2) der Antwortnachricht und der Sendezeit (Zeit 1) der Anfragenachricht, und
einer Hälfte der Umlaufzeit (RTT), und

einen Verzögerungszeit-Berechner (230), der konfiguriert ist zum:
Berechnen, wenn das Client-Gerät eine Push-Nachricht mit einer darin enthaltenen Sendezeit (Zeit 4) basierend auf der lokalen Zeit des Nachrichten-Servers von dem Nachrichten-Server empfängt, einer Verzögerungszeit für die Push-Nachricht, wobei die Verzögerungszeit als eine mathematische Summe von Folgendem berechnet wird:

einer Differenz zwischen der in der Push-Nachricht enthaltenen Sendezeit (Zeit 4) und einer Empfangszeit (Zeit 5) der Push-Nachricht basierend auf der lokalen Zeit des Client-Geräts, und
dem Zeitabstand.

2. Vorrichtung (200; 500) nach Anspruch 1, die weiterhin umfasst:

einen Verbindungsverlauf-Verwalter (510), der konfiguriert ist zum Speichern von Netzverbindungsverlaufsinformationen des Client-Geräts (150),
einen Verzögerungsinformationen-Verwalter (530), der konfiguriert ist zum Speichern von Nachrichtenverzögerungsinformationen in Bezug auf die Push-Nachricht, und
eine Steuereinrichtung (550), die konfiguriert ist zum Steuern des Client-Geräts basierend auf den Netzverbindungsverlaufsinformationen und/oder den Nachrichtenverzögerungsinformationen,
wobei die Netzverbindungsverlaufsinformationen Netzidentifikationsinformationen, eine Verbindungsstartzeit und eine Verbindungsendzeit für jedes Netz, mit dem das Client-Gerät verbunden ist, umfassen, und
wobei die Nachrichtenverzögerungsinformationen die Empfangszeitinformationen, die Verzögerungszeit und Netzidentifikationsinformationen eines Netzes, mit dem das Client-Gerät zu dem Zeitpunkt, zu dem die Push-Nachricht gesendet wurde, verbunden war, umfassen.

3. Vorrichtung (200; 500) nach Anspruch 2, wobei der Verzögerungsinformationen-Verwalter konfiguriert ist zum Identifizieren, basierend auf den Empfangszeitinformationen, der Verzögerungszeit und den Netzverbindungsverlaufsinformationen, des Netzes, mit dem das Client-Gerät (150) zu dem Zeitpunkt, zu dem die Push-Nachricht gesendet wurde, verbunden war.

4. Vorrichtung (200; 500) nach Anspruch 2, wobei die Steuereinrichtung konfiguriert ist zum Steuern des Client-Geräts für das Einstellen einer Ping-Periode einer Push-Sitzung für das Empfangen einer Push-Nachricht in einem Netz, mit dem das Client-Gerät derzeit verbunden ist, basierend auf der Verzögerungszeit und den Netzidentifikationsinformationen, die in den Nachrichtenverzögerungsinformationen enthalten sind.

5. Vorrichtung (200; 500) nach Anspruch 2, wobei die Steuereinrichtung (550) konfiguriert ist zum Identifizieren einer früheren Verbindungshaltezeit des Client-Geräts (150) für das Netz, mit dem das Client-Gerät derzeit verbunden ist, aus den Netzverbindungsverlaufsinformationen, zum Bestimmen eines Netzes für die Verbindung für einen Push-Nachrichtenempfang innerhalb des Netzes, mit dem das Client-Gerät derzeit verbunden ist, und anderen Netzen, mit denen das Client-Gerät verbunden werden kann, und zum Steuern des Client-Geräts für das Empfangen einer Push-Nachricht über das bestimmte Netz.

6. Vorrichtung (200, 500) nach Anspruch 2, wobei:

   die Nachrichtenverzögerungsinformationen weiterhin Empfangsfehlerinformationen zu einem fehlerhaften Empfangen der Push-Nachricht über das Netz, mit dem das Client-Gerät (150) zu dem Zeitpunkt, zu dem die Push-Nachricht gesendet wurde, verbunden war, umfassen,
   wenn die Netzidentifikationsinformationen des Netzes, mit dem das Client-Gerät zu dem Zeitpunkt, zu dem die Push-Nachricht gesendet wurde, verbunden war, verschieden sind von den Identifikationsinformationen eines Netzes, mit dem das Client-Gerät zu dem Zeitpunkt des Empfangens der Push-Nachricht verbunden war, der Verzögerungsinformationen-Verwalter (530) konfiguriert ist zum Bestimmen, dass der Empfang der Push-Nachricht über das Netz, mit dem das Client-Gerät zu dem Zeitpunkt, zu dem die Push-Nachricht gesendet wurde, verbunden war, fehlgeschlagen ist, und
   die Steuereinrichtung (550) konfiguriert ist zum Bestimmen, basierend auf der Verzögerungszeit, den Netzidentifikationsinformationen und den Empfangsfehlerinformationen, die in den Nachrichtenverzögerungsinformationen enthalten sind, eines Netzes für die Verwendung für einen Push-Nachrichtenempfang innerhalb des Netzes, mit dem das Client-Gerät derzeit verbunden ist, und anderen Netzen, mit denen das Client-Gerät verbunden werden kann, und zum Steuern des Client-Geräts für das Empfangen einer Push-Nachricht über das bestimmte Netz.

7. Vorrichtung (200; 500) nach Anspruch 2, wobei:

   die Nachrichtenverzögerungsinformationen weiterhin Schlummermoduszustandsinformationen des Client-Geräts (150) umfassen,
   der Verzögerungsinformationen-Verwalter (530) konfiguriert ist zum Bestimmen, dass sich das Client-Gerät in einem Schlummermoduszustand befindet, wenn das Client-Gerät eine Nachricht in Entsprechung zu der Push-Nachricht von dem Nachrichten-Server (110) nach dem Empfangen der Push-Nachricht nicht empfangen konnte, und
   die Steuereinrichtung (550) konfiguriert ist zum Steuern, basierend auf den Schlummermoduszustandsinformationen, des Client-Geräts für das Vorsehen einer Benachrichtigungsnachricht für eine Schlummermodus-Ausnahmehandhabung an einen Benutzer.

8. Verfahren zum Verwalten einer Nachrichtenübertragungsverzögerung, wobei das Verfahren durch eine in einem Client-Gerät (150) enthaltene Vorrichtung (200; 500) durchgeführt wird, wobei das Verfahren umfasst:
   Erhalten (610; 710) von lokalen Zeitinformationen eines Nachrichten-Servers (110), wobei das Erhalten umfasst:

   Senden einer Anfragenachricht für das Anfragen der lokalen Zeitinformationen des Nachrichten-Servers an den Nachrichten-Server, und
   Empfangen, von dem Nachrichten-Server, einer Antwortnachricht, die die lokalen Zeitinformationen des Nachrichten-Servers enthält, wobei die in der Antwortnachricht enthaltenen lokalen Zeitinformationen eine Sendezeit (Zeit 2) der Antwortnachricht basierend auf einer lokalen Zeit des Nachrichten-Servers enthalten,
   Berechnen (620; 720), basierend auf den erhaltenen lokalen Zeitinformationen, eines Zeitabstands zwischen der lokalen Zeit des Nachrichten-Servers und der lokalen Zeit des Client-Geräts, wobei das Berechnen des Zeitabstands das Berechnen einer Umlaufzeit (Round Trip Time bzw. RTT) unter Verwendung einer Sendezeit (Zeit 1) der Anfragenachricht basierend auf der lokalen Zeit des Client-Geräts und einer Empfangszeit (Zeit 3) der Antwortnachricht basierend auf der lokalen Zeit des Client-Geräts umfasst, und
Berechnen des Zeitabstands als einer mathematischen Differenz zwischen:

einer Differenz zwischen der Sendezeit (Zeit 2) der Antwortnachricht und der Sendezeit (Zeit 1) der Anfragenachricht, und
einer Hälfte der Umlaufzeit (RTT), und

Berechnen (640; 740), wenn das Client-Gerät eine Push-Nachricht mit einer darin enthaltenen Sendezeit (Zeit 4) basierend auf der lokalen Zeit des Nachrichten-Servers von dem Nachrichten-Server empfängt (630; 730), einer Verzögerungszeit für die Push-Nachricht, wobei die Verzögerungszeit als eine mathematische Summe von Folgendem berechnet wird:

einer Differenz zwischen der in der Push-Nachricht enthaltenen Sendezeit (Zeit 4) und einer Empfangszeit (Zeit 5) der Push-Nachricht basierend auf der lokalen Zeit des Client-Geräts, und
dem Zeitabstand.

9. Verfahren nach Anspruch 8, das weiterhin das Steuern (750) des Client-Geräts (150) basierend auf den Netzverbindungsverlaufsinformationen und/oder den Nachrichtenverzögerungsinformationen umfasst,
wobei die Netzverbindungsverlaufsinformationen Netzidentifikationsinformationen, eine Verbindungsstartzeit und eine Verbindungsendzeit für jedes Netz, mit dem das Client-Gerät verbunden ist, umfassen und wobei die Nachrichtenverzögerungsinformationen die Empfangszeitinformationen, die Verzögerungszeit und Netzidentifikationsinformationen eines Netzes, mit dem das Client-Gerät zu dem Zeitpunkt, zu dem die Push-Nachricht gesendet wurde, verbunden war, umfassen.

10. Verfahren nach Anspruch 9, wobei das Steuern (750) das Identifizieren, basierend auf den Empfangszeitinformationen, der Verzögerungszeit und den Netzverbindungsverlaufsinformationen, des Netzes, mit dem das Client-Gerät (150) zu dem Zeitpunkt, zu dem die Push-Nachricht gesendet wurde, verbunden war, umfasst.

11. Verfahren nach Anspruch 9, wobei das Steuern (750) das Steuern des Client-Geräts (150) für das Einstellen einer Ping-Periode einer Push-Sitzung für das Empfangen einer Push-Nachricht in einem Netz, mit dem das Client-Gerät derzeit verbunden ist, basierend auf der Verzögerungszeit und den Netzidentifikationsinformationen, die in den Nachrichtenverzögerungsinformationen enthalten sind, umfasst.

12. Verfahren nach Anspruch 9, wobei das Steuern (750) umfasst:

Identifizieren einer früheren Verbindungshaltezeit des Client-Geräts (150) für das Netz, mit dem das Client-Gerät derzeit verbunden ist, aus den Netzverbindungsverlaufsinformationen,
Bestimmen eines Netzes für die Verwendung für einen Push-Nachrichtenempfang innerhalb des Netzes, mit dem das Client-Gerät derzeit verbunden ist, und anderen Netzen, mit denen das Client-Gerät verbunden werden kann, und
Steuern des Client-Geräts für das Empfangen einer Push-Nachricht über das bestimmte Netz.

13. Verfahren nach Anspruch 9, wobei die Nachrichtenverzögerungsinformationen weiterhin Empfangsfehlerinformationen zu einem fehlerhaften Empfang der Push-Nachricht über das Netz, mit dem das Client-Gerät (150) zu dem Zeitpunkt, zu dem die Push-Nachricht gesendet wurde, verbunden war, umfassen, und

wobei das Steuern (750) das Bestimmen, basierend auf der Verzögerungszeit, den Netzidentifikationsinformationen und den Empfangsfehlerinformationen, die in den Nachrichtenverzögerungsinformationen enthalten sind, eines Netzes für die Verwendung für den Push-Nachrichtenempfang innerhalb des Netzes, mit dem das Client-Gerät derzeit verbunden ist, und anderen Netzen, mit denen das Client-Gerät verbunden werden kann, umfasst,
Steuern des Client-Geräts für das Empfangen einer Push-Nachricht über das bestimmte Netz,
und wenn die Netzidentifikationsinformationen des Netzes, mit dem das Client-Gerät zu dem Zeitpunkt, zu dem die Push-Nachricht gesendet wurde, verbunden war, verschieden sind von den Netzidentifikationsinformationen eines Netzes, mit dem das Client-Gerät zu dem Zeitpunkt des Empfangens der Push-Nachricht verbunden war,
Bestimmen, dass der Empfang der Push-Nachricht über das Netz, mit dem das Client-Gerät zu dem Zeitpunkt, zu dem die Push-Nachricht gesendet wurde, verbunden war, fehlgeschlagen ist.

**14.** Verfahren nach Anspruch 9, wobei:

die Nachrichtenverzögerungsinformationen weiterhin Schlummermoduszustandsinformationen des Client-Geräts (150) umfassen, und
das Steuern (750) das Bestimmen, dass sich das Client-Gerät in einem Schlummermoduszustand befindet, wenn das Client-Gerät eine Nachricht in Entsprechung zu der Push-Nachricht von dem Nachrichten-Server nach dem Empfangen der Push-Nachricht nicht empfangen konnte, und das Steuern, basierend auf den Schlummermoduszustandsinformationen, des Client-Geräts für das Vorsehen einer Benachrichtigungsnachricht für eine Schlummermodus-Ausnahmehandhabung an einen Benutzer umfasst.

**Revendications**

**1.** Appareil (200 ; 500) de gestion du retard de transmission de messages, l'appareil étant configuré pour être inclus dans un dispositif client (150), l'appareil comprenant :

un calculateur d'intervalle de temps (210) configuré pour :

transmettre un message de demande pour demander des informations d'heure locale d'un serveur de messages (110) au serveur de messages,
recevoir, du serveur de messages, un message de réponse comprenant les informations d'heure locale du serveur de messages, dans lequel les informations d'heure locale incluses dans le message de réponse comprennent un temps de transmission (Temps 2) du message de réponse basé sur une heure locale du serveur de messages,
calculer un temps d'aller-retour, RTT, en utilisant un temps de transmission (Temps 1) du message de demande basé sur l'heure locale du dispositif client et un temps de réception (Temps 3) du message de réponse basé sur l'heure locale du dispositif client, et
calculer un intervalle de temps entre l'heure locale du serveur de messages et l'heure locale d'un dispositif client (150), dans lequel l'intervalle de temps est calculé comme une différence mathématique entre :

une différence entre le temps de transmission (Temps 2) du message de réponse et le temps de transmission (Temps 1) du message de demande, et
la moitié du temps d'aller-retour, RTT ; et

un calculateur de temps de retard (230) configuré pour :
calculer, lorsque le dispositif client reçoit un message push comprenant un temps de transmission (Temps 4) basé sur l'heure locale du serveur de messages en provenance du serveur de messages, un temps de retard pour le message push, dans lequel le temps de retard est calculé comme une somme mathématique :

d'une différence entre le temps de transmission (Temps 4) inclus dans le message push et un temps de réception (Temps 5) du message push basé sur l'heure locale du dispositif client, et
de l'intervalle de temps.

**2.** Appareil (200 ; 500) de la revendication 1, comprenant en outre :

un gestionnaire d'historique de connexion (510) configuré pour stocker des informations d'historique de connexion réseau du dispositif client (150) ;
un gestionnaire d'informations de retard (530) configuré pour stocker des informations de retard de message concernant le message push ; et
une unité de commande (550) configurée pour commander le dispositif client sur la base des informations d'historique de connexion réseau et/ou des informations de retard de message,
dans lequel les informations d'historique de connexion réseau comprennent des informations d'identification de réseau, une heure de début de connexion et une heure de fin de connexion pour chaque réseau auquel le dispositif client est connecté, et
les informations de retard de message comprennent les informations de temps de réception, le temps de retard et les informations d'identification de réseau d'un réseau auquel le dispositif client était connecté au moment où le message push a été transmis.

3. Appareil (200 ; 500) de la revendication 2, dans lequel le gestionnaire d'informations de retard est configuré pour identifier, sur la base des informations de temps de réception, du temps de retard et des informations d'historique de connexion réseau, le réseau auquel le dispositif client (150) était connecté au moment où le message push a été transmis.

4. Appareil (200 ; 500) de la revendication 2, dans lequel l'unité de commande est configurée pour commander le dispositif client afin d'ajuster une période ping d'une session push pour recevoir un message push dans un réseau auquel le dispositif client est actuellement connecté, sur la base du temps de retard et des informations d'identification de réseau qui sont incluses dans les informations de retard de message.

5. Appareil (200 ; 500) de la revendication 2, dans lequel l'unité de commande (550) est configurée pour identifier un temps de maintien de connexion passé du dispositif client (150) pour le réseau auquel le dispositif client est actuellement connecté à partir des informations d'historique de connexion réseau, déterminer un réseau à utiliser pour la réception de messages push parmi le réseau auquel le dispositif client est actuellement connecté et d'autres réseaux auxquels le dispositif client est connectable, et commander le dispositif client pour recevoir un message push via le réseau déterminé.

6. Appareil (200 ; 500) de la revendication 2, dans lequel

les informations de retard de message comprennent en outre des informations d'échec de réception sur l'échec de réception du message push via le réseau auquel le dispositif client (150) était connecté au moment où le message push a été transmis,
lorsque les informations d'identification de réseau du réseau auquel le dispositif client était connecté au moment où le message push a été transmis sont différentes des informations d'identification de réseau d'un réseau auquel le dispositif client était connecté au moment de la réception du message push, le gestionnaire d'informations de retard (530) est configuré pour déterminer que la réception du message push via le réseau auquel le dispositif client était connecté au moment où le message push a été transmis a échoué, et
l'unité de commande (550) est configurée pour déterminer, sur la base du temps de retard, les informations d'identification de réseau et les informations d'échec de réception qui sont incluses dans les informations de retard de message, un réseau à utiliser pour la réception du message push parmi le réseau auquel le dispositif client est actuellement connecté et d'autres réseaux auxquels le dispositif client est connectable, et commander le dispositif client pour recevoir un message push via le réseau déterminé.

7. Appareil (200 ; 500) de la revendication 2, dans lequel

les informations de retard de message comprennent en outre des informations d'état de mode veille du dispositif client (150),
le gestionnaire d'informations de retard (530) est configuré pour déterminer que le dispositif client est en état de mode veille lorsque le dispositif client a échoué à recevoir un message correspondant au message push du serveur de messages (110) après avoir reçu le message push, et
l'unité de commande (550) est configurée pour commander, sur la base des informations d'état de mode veille, le dispositif client pour fournir un message de notification pour la gestion des exceptions de mode veille à un utilisateur.

8. Procédé de gestion du retard de transmission de messages, le procédé étant réalisé par un appareil (200 ; 500) inclus dans un dispositif client (150), le procédé comprenant :

l'acquisition (610 ; 710) d'informations d'heure locale d'un serveur de messages (110), dans lequel l'acquisition comprend :

la transmission d'un message de demande pour demander les informations d'heure locale du serveur de messages au serveur de messages, et
la réception, du serveur de messages, d'un message de réponse comprenant les informations d'heure locale du serveur de messages, dans lequel les informations d'heure locale incluses dans le message de réponse comprennent un temps de transmission (Temps 2) du message de réponse basé sur une heure locale du serveur de messages ;
le calcul (620 ; 720) sur la base des informations d'heure locale acquises, d'un intervalle de temps entre l'heure locale du serveur de messages et l'heure locale du dispositif client, dans lequel le calcul de l'intervalle de temps comprend le calcul d'un temps d'aller-retour, RTT, en utilisant un temps de transmission (Temps 1) du message de demande basé sur l'heure locale du dispositif client et un temps de réception (Temps 3) du message de réponse basé sur l'heure locale du dispositif client ; et le calcul de l'intervalle de temps comme une différence mathématique entre :

une différence entre le temps de transmission (Temps 2) du message de réponse et le temps de transmission (Temps 1) du message de demande, et
la moitié du temps d'aller-retour, RTT ; et

le calcul (640 ; 740), lorsque le dispositif client reçoit (630 ; 730) un message push comprenant un temps de transmission (Temps 4) basé sur l'heure locale du serveur de messages en provenance du serveur de messages, d'un temps de retard pour le message push, dans lequel le temps de retard est calculé comme une somme mathématique :

d'une différence entre le temps de transmission (Temps 4) inclus dans le message push et un temps de réception (Temps 5) du message push basé sur l'heure locale du dispositif client, et
de l'intervalle de temps.

9. Procédé de la revendication 8, comprenant en outre la commande (750) du dispositif client (150) sur la base des informations d'historique de connexion réseau et/ou des informations de retard de message,
dans lequel les informations d'historique de connexion réseau comprennent des informations d'identification de réseau, une heure de début de connexion et une heure de fin de connexion pour chaque réseau auquel le dispositif client est connecté, et les informations de retard de message comprennent les informations de temps de réception, le temps de retard et les informations d'identification de réseau d'un réseau auquel le dispositif client était connecté au moment où le message push a été transmis.

10. Procédé de la revendication 9, dans lequel la commande (750) comprend l'identification, sur la base des informations de temps de réception, du temps de retard et des informations d'historique de connexion réseau, du réseau auquel le dispositif client (150) était connecté au moment où le message push a été transmis.

11. Procédé de la revendication 9, dans lequel la commande (750) comprend la commande du dispositif client (150) pour ajuster une période ping d'une session push pour recevoir un message push dans un réseau auquel le dispositif client est actuellement connecté, sur la base du temps de retard et des informations d'identification de réseau qui sont incluses dans les informations de retard de message.

12. Procédé de la revendication 9, dans lequel la commande (750) comprend :

l'identification d'un temps de maintien de connexion passé du dispositif client (150) pour le réseau auquel le dispositif client est actuellement connecté à partir des informations d'historique de connexion réseau ;
la détermination d'un réseau à utiliser pour la réception de messages push parmi le réseau auquel le dispositif client est actuellement connecté et d'autres réseaux auxquels le dispositif client est connectable ; et
la commande du dispositif client pour recevoir un message push via le réseau déterminé.

13. Procédé de la revendication 9, dans lequel les informations de retard de message comprennent en outre des informations d'échec de réception sur l'échec de réception du message push via le réseau auquel le dispositif client (150) était connecté au moment où le message push a été transmis, et

la commande (750) comprend la détermination, sur la base du temps de retard, des informations d'identification de réseau et des informations d'échec de réception qui sont incluses dans les informations de retard de message, d'un réseau à utiliser pour la réception de message push parmi le réseau auquel le dispositif client est actuellement connecté et d'autres réseaux auxquels le dispositif client est connectable ;
la commande du dispositif client pour recevoir un message push via le réseau déterminé ; et lorsque les informations d'identification de réseau du réseau auquel le dispositif client était connecté au moment où le message push a été transmis sont différentes des informations d'identification de réseau d'un réseau auquel le dispositif client était connecté au moment de la réception du message push, la détermination que la réception du message push via le réseau auquel le dispositif client était connecté au moment où le message push a été transmis a échoué.

**14.** Procédé de la revendication 9, dans lequel

les informations de retard de message comprennent en outre des informations d'état de mode veille du dispositif client (150), et

la commande (750) comprend la détermination que le dispositif client est en état de mode veille lorsque le dispositif client a échoué à recevoir un message correspondant au message push du serveur de messages après avoir reçu le message push ; et la commande, sur la base des informations d'état de mode veille, du dispositif client pour fournir un message de notification pour la gestion des exceptions de mode veille à un utilisateur.

# FIG. 1

100

# FIG. 2

# FIG. 3

# FIG. 4

110

150

| MESSAGE SERVER | | CLIENT DEVICE |

Time 4

*PUSH MESSAGE*

Time 5

# FIG. 5

# FIG. 6

START

ACQUIRE LOCAL TIME INFORMATION OF
MESSAGE SERVER — 610

CALCULATE TIME GAP BETWEEN LOCAL TIME
OF MESSAGE SERVER AND LOCAL TIME OF
CLIENT DEVICE — 620

630

NO — IS PUSH MESSAGE RECEIVED?

YES

CALCULATE DELAY TIME FOR RECEIVED PUSH
MESSAGE — 640

END

# FIG. 7

```
              ┌─────────────┐
              │    START    │
              └─────────────┘
                     │
                     ▼
     ┌──────────────────────────────────┐
     │  ACQUIRE LOCAL TIME INFORMATION OF │──── 710
     │         MESSAGE SERVER            │
     └──────────────────────────────────┘
                     │
                     ▼
     ┌──────────────────────────────────┐
     │ CALCULATE TIME GAP BETWEEN LOCAL TIME │──── 720
     │  OF MESSAGE SERVER AND LOCAL TIME OF  │
     │           CLIENT DEVICE            │
     └──────────────────────────────────┘
                     │              730
                     ▼
              ╱─────────────────╲
        NO   ╱ IS PUSH MESSAGE    ╲
     ◄──────│     RECEIVED?        │
              ╲                   ╱
               ╲─────────────────╱
                     │
                    YES
                     ▼
     ┌──────────────────────────────────┐
     │ CALCULATE DELAY TIME FOR RECEIVED PUSH │──── 740
     │             MESSAGE               │
     └──────────────────────────────────┘
                     │
                     ▼
     ┌──────────────────────────────────┐
     │       CONTROL CLIENT DEVICE        │──── 750
     └──────────────────────────────────┘
                     │
                     ▼
              ┌─────────────┐
              │     END     │
              └─────────────┘
```

# FIG. 8

<u>10</u>

COMPUTING DEVICE

PROCESSOR 14

COMPUTER- READABLE STORAGE MEDIUM 16

PROGRAM 20

18

INPUT/OUTPUT INTERFACE 22

NETWORK COMMUNICATION INTERFACE 26

INPUT/OUTPUT DEVICE 24

12

**REFERENCES CITED IN THE DESCRIPTION**

**Patent documents cited in the description**

- US 2003031185 A1